# EUROPEAN PATENT APPLICATION

(11) **EP 4 810 574 A1**
(43) Date of publication of application: **23.09.2026**
(21) Application number: 24891430.1
(22) Date of filing: 13.11.2024
(51) Int. Cl.: C08L 101/10, C08L 33/06, C08L 71/02, C09J 133/04, C09J 171/00, C09J 201/10, C09K 3/10

(54) **MOISTURE CURABLE COMPOSITION AND CURED PRODUCT**

(30) Priority: 16.11.2023 JP 2023195483
(71) Applicant: ThreeBond Co., Ltd., Tokyo 192-0398 (JP)
(72) Inventor: NISHIZAWA, Takuto, Hachioji-shi, Tokyo 192-0398 (JP)
(74) Representative: Crow, Martin
(86) International application number: PCT/JP2024/040336
(87) International publication number: WO 2025/105394

(57) **Abstract**

Provided is a moisture-curable composition that provides a cured product having high elongation, high strength, and excellent heat resistance.

The moisture-curable composition contains the following components (A) to (C):
Component (A): an organic polymer having two or more alkoxysilyl groups in its molecule;
Component (B): an organometallic catalyst; and
Component (C): an aromatic secondary amine compound.

## Description

### TECHNICAL FIELD

The present invention relates to a moisture-curable composition that provides a cured product excellent in heat resistance and a cured product thereof.

### BACKGROUND ART

Recently, from the viewpoint of reducing the weight of on-board batteries, aluminum members are often used as described in JP 2022-175357 A. Further, for the purpose of increasing the production efficiency of the batteries, the use of a heat source such as a hot-air drier during production is required to be abolished. Therefore, sealing agents and adhesives used for the batteries are required to be moisture-curable or room temperature-curable. Furthermore, the temperature in the batteries increases due to heat generation and the influence of outside environments, and therefore sealing agents and adhesives used for the batteries are required to have durability such as heat resistance.

### SUMMARY OF INVENTION

However, cured products of conventional moisture-curable compositions had insufficient heat resistance, while having high elongation and high strength, because the change in the rubber properties of the cured products due to thermal degradation was significant.

It is therefore an object of the present invention to provide a moisture-curable composition that provides a cured product having high elongation, high strength, and excellent heat resistance.

The summary of the present invention will be described below. The present invention is intended to overcome the above conventional problem.

The summary of the present invention will be described below. A first aspect of the present invention provides a moisture-curable composition containing the following components (A) to (C):
Component (A): an organic polymer having two or more alkoxysilyl groups in its molecule;
Component (B): an organometallic catalyst; and
Component (C): an aromatic secondary amine compound.

A second aspect of the present invention provides the moisture-curable composition according to the first aspect, wherein a metal of the component (B) is at least one selected from the group consisting of zinc, titanium, and tin.

A third aspect of the present invention provides the moisture-curable composition according to the second aspect, wherein the metal of the component (B) is zinc.

A fourth aspect of the present invention provides the moisture-curable composition according to any one of the first to third aspects, wherein the component (C) has any one of structures represented by general formulas 1 to 3 that will be described later.

A fifth aspect of the present invention provides the moisture-curable composition according to any one of the first to fourth aspects, wherein the component (C) contains N,N'-di-2-naphthyl-p-phenylenediamine or 4,4'-bis(α,α-dimethylbenzyl)diphenylamine.

A sixth aspect of the present invention provides the moisture-curable composition according to any one of the first to fifth aspects, wherein a main chain of the organic polymer as the component (A) is a polyoxyalkylene or a poly(meth)acrylate.

A seventh aspect of the present invention provides the moisture-curable composition according to any one of the first to sixth aspects, wherein the organic polymer as the component (A) is linear and has alkoxysilyl groups at both ends thereof.

An eighth aspect of the present invention provides the moisture-curable composition according to any one of the first to seventh aspects, wherein a content of the component (C) is 0.01 to 20 parts by mass per 100 parts by mass of the component (A).

A ninth aspect of the present invention provides a cured product obtained by curing the moisture-curable composition according to any one of the first to eighth aspects.

### DESCRIPTION OF EMBODIMENTS

An aspect of the present invention provides a moisture-curable composition comprising the following components (A) to (C):
Component (A): an organic polymer having two or more alkoxysilyl groups in its molecule;
Component (B): an organometallic catalyst; and
Component (C): an aromatic secondary amine compound.

The moisture-curable composition according to the present invention provides a cured product having high elongation, high strength, and excellent heat resistance.

Hereinbelow, the present invention will be described in detail. It should be noted that the expression "X to Y" used herein means that X as a numerical value and Y as a numerical value are included as a lower limit and an upper limit, respectively. Further, the term "(meth)acrylate" herein means both "acrylate" and "methacrylate".

### <Component (A)>

The component (A) that can be used in the present invention is an organic polymer having two or more alkoxysilyl groups in its molecule. Particularly, the organic polymer is preferably a linear organic polymer having alkoxysilyl groups at both ends thereof because the cured product has higher elongation and higher strength and is more excellent in tensile lap-shear strength to aluminum. The alkoxysilyl groups cause a crosslinking reaction with the component (B) that will be described later and moisture (humidity) that enters into the moisture-curable composition from the outside air. Specific examples of the component (A) include a component (A-1) that is an organic polymer as the component (A) whose main chain is a polyoxyalkylene and a component (A-2) that is an organic polymer as the component (A) whose main chain is a poly(meth)acrylate. In consideration of heat resistance, the component (A) is preferably a component (A-1).

Examples of the alkoxysilyl groups of the component (A) include trialkoxysilyl groups such as a trimethoxysilyl group, a triethoxysilyl group, and a triisopropoxysilyl group; dialkoxysilyl groups such as a methyldimethoxysilyl group and a methyldiethoxysilyl group; and monoalkoxysilyl groups such as a dimethylmethoxysilyl group and a dimethylethoxysilyl group. The alkoxysilyl groups of the component (A) are preferably dialkoxysilyl groups or trialkoxysilyl groups, most preferably trimethoxysilyl groups or triethoxysilyl groups because the cured product has more excellent heat resistance.

From the viewpoint of handleability, the component (A) is preferably liquid at 25°C. The viscosity of the component (A) in an atmosphere at 25°C is preferably 0.5 to 500 Pa·s, more preferably 1 to 200 Pa·s, even more preferably 3 to 150 Pa·s, still even more preferably 10 to 100 Pa·s. When the viscosity is 0.5 to 500 Pa·s, there is such an effect that the cured product has higher elongation and higher strength and is more excellent in tensile lap-shear strength to aluminum. It should be noted that unless otherwise specified, the viscosity was measured at 25°C using a cone and plate viscometer in accordance with JIS K 6833-1:2008.

A commercially-available product of the component (A-1) is not limited, and examples thereof include, but are not limited to, SAT010, SAX115, SAT030, SAT200, SAT350, SAT400, SAX220, SAX510, SAX520, SAX530, SAX575, SAX580, SAX710, SAX720, SAX725, SAX750, SAX770, S203, S303, S203H, S303H, S943S, S911S, MA440, MA447, MA451, MA903, MA903M, MA904, S943, MAX923, and MAX951 manufactured by KANEKA CORPORATION.

Examples of a commercially-available product of the component (A-2) include, but are not limited to, SA110S, SA100S, SA120S, and OR110S manufactured by KANEKA CORPORATION.

### <Component (B)>

The component (B) that can be used in the present invention is an organometallic catalyst. The component (B) is a catalyst that cures the moisture-curable composition. The component (B) promotes dealcoholization condensation between the components (A), between the component (A) and an alkoxysilyl group-containing silane compound (excluding the component (A)) that will be described later, or between alkoxysilyl group-containing silane compounds (excluding the component (A)). Specific examples of the component (B) as a curing catalyst include an organotin catalyst, an organotitanium catalyst, an organozirconium catalyst, and an organozinc catalyst. From the viewpoint of the variety of usable catalyst species, reactivity, and cost, preferred are an organotin catalyst, an organotitanium catalyst, and an organozinc catalyst, and most preferred is an organozinc catalyst. That is, the metal of the component (B) is preferably at least one selected from the group consisting of zinc, titanium, and tin, more preferably zinc. Further, from the viewpoint of preventing a reduction in catalytic activity due to interference between ligands, one type of the component (B) is preferably used alone without mixing two or more types of the components (B).

Specific examples of the organotin catalyst include, but are not limited to, divalent organotin compounds such as tin octylate and tin naphthenate, tetravalent organotin compounds such as dibutyltin dioctoate, dibutyltin dilaurate, dibutyltin diacetate, dibutyltin dimaleate, dibutyltin distearate, dioctyltin dilaurate, dioctyltin diversatate, dibutyltin oxide, and dibutyltin bis(triethoxysilicate), and chelated tin compounds such as tin-based chelate compounds, e.g., dibutyltin bis(acetylacetonate).

Specific examples of the organotitanium catalyst include, but are not limited to, tetraisopropyl titanate, tetranormal butyl titanate, butyl titanate dimer, tetraoctyl titanate, titanium acetylacetonate, titanium octylene glycolate, titanium tetra-acetylacetonate, titanium ethyl acetoacetate, polyhydroxy titanium stearate, titanium lactate, titanium triethanol aminate, and titanium diisopropoxy bis(ethyl acetoacetate).

The component (B) may be an organozirconium catalyst. Specific examples of the organozirconium catalyst include, but are not limited to, tetranormalpropoxy zirconium, tetranormalbutoxy zirconium, zirconium tetra-acetylacetonate, zirconium monobutoxyacetylacetonate bis(ethyl acetoacetate), zirconium dibutoxy bis(ethyl acetoacetate), and zirconium tributoxystearate.

Specific examples of the organozinc catalyst include, but are not limited to, zinc(1-butylimidazole)₂(acetate)₂, zinc(1-methylimidazole)₂(acetate)₂, zinc(imidazole)₂(acetate)₂, zinc(1,2-dimethylimidazole)₂(acetate)₂, zinc(tetramethylguanidine)₂(acetate)₂, zinc(DBN)₂(acetate)₂, zinc(DBU)₂(acetate)₂, zinc(1-butylimidazole)₂(acetate)₂, zinc(1-methylimidazole)₂(formate)₂, zinc(imidazole)₂(formate)₂, zinc(1,2-dimethylimidazole)₂(formate)₂, zinc(tetramethylguanidine)₂(formate)₂, zinc(DBN)₂(formate)₂, zinc(DBU)₂(formate)₂, zinc(1-butylimidazole)₂(neodecanoate)₂, zinc(1-methylimidazole)₂(neodecanoate)₂, zinc(imidazole)₂(neodecanoate)₂, zinc(1,2-dimethylimidazole)₂(neodecanoate)₂, zinc(tetramethylguanidine)₂(neodecanoate)₂, zinc(DBN)₂(neodecanoate)₂, and zinc(DBU)₂(neodecanoate)₂. Here, DBN refers to 1,5-diazabicyclo[4.3.0]non-5-ene and DBU refers to 1,8-diazabicyclo[5.4.0]undec-7-ene.

The organozinc catalyst may be, for example, a complex compound having zinc (divalent) as a central metal. When the component (B) contains a ligand, examples of the ligand include an amine compound, a carboxylate compound, a β-ketoester compound, and a β-diketone compound. Among these, an amine compound and a carboxylate compound are preferred.

Examples of the carboxylate compound include acetic acid, formic acid, oxalic acid, malonic acid, succinic acid, glutaric acid, adipic acid, pimelic acid, suberic acid, azelaic acid, sebacic acid, and neodecanoic acid. Examples of the β-ketoester compound include methyl acetoacetate, ethyl acetoacetate, n-propyl acetoacetate, isopropyl acetoacetate, n-butyl acetoacetate, sec-butyl acetoacetate, and t-butyl acetoacetate. Examples of the β-diketone compound include acetyl acetone, hexane-2,4-dione, heptane-2,4-dione, heptane-3,5-dione, octane-2,4-dione, nonane-2,4-dione, and 5-methyl-hexane-2,4-dione. Examples of the amine compound include alkylamine compounds such as n-propylamine, isopropylamine, n-butylamine, n-hexylamine, n-octylamine, 2-ethylhexylamine, n-decylamine, and n-dodecylamine. These may be used alone or in combination of two or more of them. The component (B) is particularly preferably a zinc alkylamine complex. The zinc alkylamine complex is an organozinc catalyst in which an alkylamine compound coordinates to zinc.

The component (B) may be added in the form of a composition obtained by, for example, mixing with a curing accelerator, a plasticizer, and a solvent that will be described later.

Examples of a commercially-available product of the organozinc catalyst include, but are not limited to, K-KAT 670 and K-KAT XK-648 manufactured by KING INDUSTRIES and Borchi (Registered Trademark) Kat 0244, Borchi (Registered Trademark) Kat 15, and Borchi (Registered Trademark) Kat 22 manufactured by OMG Borchers GmbH.

The component (B) used in the present invention is particularly preferably an organozinc catalyst. When the organozinc catalyst is combined with components other than the component (B), such as the component (A) and the component (C) used in the present invention, it is possible to produce a significant effect such that the cured product has higher elongation, higher strength, and more excellent heat resistance.

The content of the component (B) (or the total amount of two or more types of the components (B)) in the moisture-curable composition of the present invention is, for example, 0.01 to 25 parts by mass, more preferably 0.01 to 20 parts by mass, even more preferably 0.01 to 10 parts by mass, still even more preferably 1 to 5 parts by mass per 100 parts by mass of the component (A) (or per 100 parts by mass of the total amount of two or more types of the components (A)). When the content of the component (B) is within the above range, the moisture-curable composition provides a cured product having higher elongation, higher strength, and more excellent heat resistance.

### <Component (C)>

The component (C) that can be used in the present invention is an aromatic secondary amine compound. The component (C) has an effect as an antioxidant. It should be noted that the component (C) excludes the above-described component (B). Specifically, the component (C) is preferably a compound having any one of structures represented by the following general formulas 1 to 3.

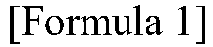

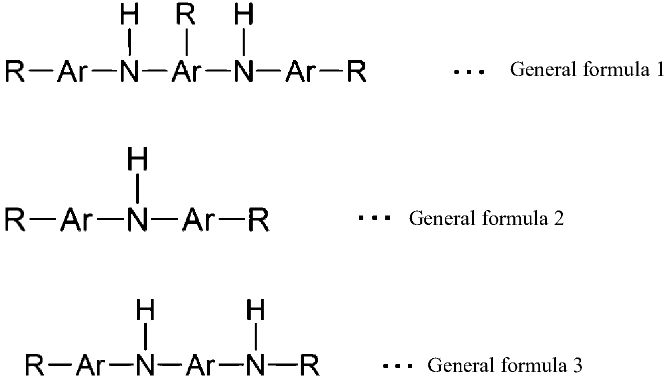

In the general formulas 1 to 3, Ars are each independently an aromatic hydrocarbon group and Rs are each independently a hydrogen atom, a substituted or unsubstituted alkyl group, a substituted or unsubstituted cycloalkyl group, a substituted or unsubstituted alkenyl group, or a substituted or unsubstituted alkynyl group.

In the above general formulas 1 to 3, the aromatic hydrocarbon groups represented by Ar may be each independently a monocyclic aromatic hydrocarbon group or a polycyclic aromatic hydrocarbon group. Specific examples of Ar include groups derived from a benzene ring or a naphthalene ring. Preferably, Ars are each independently a benzene ring group or a naphthalene ring group. It should be noted that in the above general formulas 1 to 3, the aromatic hydrocarbon group represented by Ar may have, on its aromatic ring, a substituent other than N or R shown in the above formulas, but it is preferred that the aromatic hydrocarbon group represented by Ar does not have a substituent other than these. Further, the aromatic hydrocarbon group represented by Ar may have a linking group between its aromatic ring and N or R shown in the above formulas, but it is preferred that the aromatic hydrocarbon group represented by Ar does not have such a linking group.

In the above general formulas 1 to 3, Rs are each independently a hydrogen atom, a substituted or unsubstituted alkyl group, a substituted or unsubstituted cycloalkyl group, a substituted or unsubstituted alkenyl group, or a substituted or unsubstituted alkynyl group. Examples of the alkyl group include alkyl groups having 1 to 10 carbon atoms. Examples of the cycloalkyl group include cycloalkyl groups having 3 to 10 carbon atoms. Examples of the alkenyl group include alkenyl groups having 1 to 10 carbon atoms. Examples of the alkynyl group include alkynyl groups having 1 to 10 carbon atoms.

Examples of substituent groups of the alkyl group, the cycloalkyl group, the alkenyl group, and the alkynyl group include, but are not limited to, a halogen atom, a hydroxyl group, an amino group, an alkoxy group, an alkylamino group, an alkylsulfonyl group, a (meth)acryloyl group, a (meth)acryloyloxy group, and an aromatic ring-containing group such as a substituted or unsubstituted aryl group or a substituted or unsubstituted arylalkyl group.

Adding the component (C) has such an effect that the cured product has high elongation, high strength, and excellent heat resistance. Specific examples of the component (C) include, but are not limited to, phenylenediamine-based antioxidants and diphenylamine-based antioxidants. Among these, a phenylenediamine-based antioxidant represented by the general formula 1 or 3 and a diphenylamine-based antioxidant represented by the general formula 2 are preferred, and in consideration of the hardness, tensile strength, elongation percentage, and tensile lap-shear strength of the cured product in a heat resistance test, a phenylenediamine-based antioxidant represented by the general formula 1 or 3 is most preferred. The component (C) to be used may be of only one type or may be a mixture of two or more types.

Specific examples of the phenylenediamine-based antioxidant represented by the above general formula 1 include, but are not limited to, N,N'-di-2-naphthyl-p-phenylenediamine and N,N'-diphenyl-p-phenylenediamine. From the viewpoint of more excellent heat resistance, particularly preferred is N,N'-di-2-naphtyl-p-phenylenediamine.

Specific examples of the diphenylamine-based antioxidant represented by the above general formula 2 include, but are not limited to, 4,4'-bis(α,α-dimethylbenzyl)diphenylamine, 4,4'-distyryldiphenylamine, 4,4'-dioctyldiphenylamine, octylated diphenylamine, 4-(α-phenylethyl)diphenylamine, 4,4'-bis(α-phenylethyl)diphenylamine, di-tert-butyldiphenylamine, and N-phenyl-1-naphthylamine. From the viewpoint of more excellent heat resistance, preferred are 4,4'-bis(α,α-dimethylbenzyl)diphenylamine, 4,4'-distyryldiphenylamine, 4,4'-dioctyldipihenylamine, and octylated diphenylamine, and particularly preferred is 4,4'-bis(α,α-dimethylbenzyl)diphenylamine.

Specific examples of the phenylenediamine-based antioxidant represented by the above general formula 3 include, but are not limited to, N-isopropyl-N**'**-phenyl-p-phenylenediamine, N-phenyl-N**'**-(3-methacryloyloxy-2-hydroxypropyl)-p-phenylenediamine, 2-[(mercaptoacetyl)oxy]ethyl-3-[[4-(phenylamino)phenyl]amino]butanoate, N-(1,3-dimethylbutyl)-N'-phenyl-p-phenylenediamine, N-cyclohexyl-N'-phenyl-p-phenylenediamine, phenyl-octyl-p-phenylenediamine, bis(phenyl-isopropylidene)-4,4-diphenylamine, N-(3-methacryloyloxy-2-hydroxypropyl)-N'-phenyl-p-phenylenediamine, and N-isopropyl-N'-p-phenylenediamine. From the viewpoint of excellent heat resistance, preferred is N-isopropyl-N**'**-phenyl-p-phenylenediamine or N-phenyl-N**'**-(3-methacryloyloxy-2-hydroxypropyl)-p-phenylenediamine.

It should be noted that the component (C) may be an aromatic secondary amine compound other than the compounds represented by the above general formulas 1 to 3. Examples of such an aromatic secondary amine compound include N,N'-bis(1-methylheptyl)-p-phenylenediamine, N,N-bis(1,4-dimethylpentyl)-p-phenylenediamine, 2,4,6-tris(N-1,4-dimethylpentyl-p-phenylenediamino)1,3,5-triazine, diallyl-p-phenylenediamine mixture, p-(p-toluenesulfonylamide)diphenylamine, and 4-(anilinophenyl)methacrylamide.

Examples of a commercially-available product of the component (C) include, but are not limited to, Nocrac Series manufactured by OUCHI SHINKO CHEMICAL INDUSTRIAL CO., LTD., such as Nocrac PA (N-phenyl-1-naphthylamine), Nocrac ODA, Nocrac ODA-N, Nocrac AD-F (octylated diphenylamine), Nocrac CD (4,4'-bis(α,α-dimethylbenzyl)diphenylamine), Nocrac TD (p-(p-toluenesulfonylamide)diphenylamine), Nocrac White (N,N'-di-2-naphthyl-p-phenylenediamine), Nocrac 810-NA (N-isopropyl-N'-p-phenylenediamine), Nocrac 6C (N-(1,3-dimethylbutyl)-N**'**-phenyl-p-phenylenediamine), and Nocrac G-1 (N-phenyl-N'-(3-methacryloyloxy-2-hydroxypropyl)-N'-phenyl-p-phenylenediamine) and NONFLEX OD-3, NONFLEX DCD, and STEARER LAS manufactured by Seiko Chemical Co., Ltd.

In the moisture-curable composition of the present invention, the amount of the component (C) to be added (the content of the component (C)) (or the total amount of two or more types of the components (C)) is preferably 0.01 to 20 parts by mass, more preferably 0.5 to 5 parts by mass, even more preferably 0.5 to 2 parts by mass per 100 parts by mass of the component (A) (or per 100 parts by mass of the total amount of two or more types of the components (A)). When the component (C) is added in an amount of 0.01 parts by mass or more per 100 parts by mass of the component (A), the heat resistance of the cured product is further improved, and when the amount of the component (C) added is 20 parts by mass or less, the cured product has higher elongation and higher strength.

### <Optional component>

An additive can be used for the moisture-curable composition of the present invention to the extent that the object of the present invention is not impaired, and examples of the additive include a curing accelerator, a thioether-based antioxidant, a filler, an alkoxysilyl group-containing silane compound (excluding the component (A)), a plasticizer, a solvent, a light stabilizer, a heavy metal deactivator, a tackifier, a defoaming agent, a dye, a pigment, an antirust agent, a leveling agent, a dispersant, a rheology modifier, and a surfactant.

The curing accelerator may be an amine compound. Specific examples of the amine compound include a primary amine, a secondary amine, and a tertiary amine. However, the curing accelerator excludes the above-described component (B). Further, the curing accelerator excludes the above-described component (C). Examples of the primary amine include N-propylamine, N-isopropylamine, N-butylamine, N-benzylamine, N-hexylamine, N-cyclohexylamine, N-n-octylamine, N-(2-ethylhexyl)amine, N-(2-phenylethyl)amine, N-(3-methoxypropyl)amine, N-decylamine, N-dodecylamine, and ethylenediamine. Examples of the secondary amine include N,N-dipropylamine, N,N-diisopropylamine, N,N-dibutylamine, N,N-dihexylamine, N,N-dicyclohexylamine, N,N-bis(2-methoxyethyl)amine, N,N-dioctylamine, N,N-bis(2-ethylhexyl)amine, N,N-diisononylamine, N,N-bis(tridecyl)amine, morpholine, 2,2,6,6-tetramethylpiperidine, N,N'-dimethylethylenediamine, N,N'-diethylethylenediamine, and N,N'-diisopropylethylenediamine. Examples of the tertiary amine include 3-diethylaminopropylamine, imidazole, 1-methylimidazole, 1-butylimidazole, 1,2-dimethylimidazole, tetramethylguanidine, DBU, and DBN.

The moisture-curable composition of the present invention may further contain a thioether-based antioxidant. Combining the thioether-based antioxidant with the component (C) used in the present invention has such an effect that the cured product has higher elongation, higher strength, and more excellent heat resistance. Examples of the thioether-based antioxidant include pentaerythritol tetrakis[3-(dodecylthio)propionate], pentaerythrityl tetrakis(3-laurylthiopropionate), dilauryl-3,3'-thiodipropionate, dimyristyl-3,3'-thiodipropionate, and distearyl-3,3'-thiodipropionate. The thioether-based antioxidant may be of only one type or two or more types. Examples of a commercially-available product of the thioether-based antioxidant include ADK STAB AO-503, ADK STAB AO-26, and ADK STAB AO-412S (manufactured by ADEKA CORPORATION).

When the moisture-curable composition contains a thioether-based antioxidant, the amount of the thioether-based antioxidant to be added (or the total amount of two or more types of the thioether-based antioxidants) is not limited but is preferably 0.1 to 10 parts by mass, more preferably 0.5 to 5 parts by mass per 100 parts by mass of the component (A) (or per 100 parts by mass of the total amount of two or more types of the components (A)). The content of the thioether-based antioxidant (or the total amount of two or more types of the thioether-based antioxidants) is preferably 0.1 to 10 parts by mass, particularly preferably 0.5 to 5 parts by mass per 1 part by mass of the component (C) (or per 1 part by mass of the total amount of two or more types of the components (C)). When the content of the thioether-based antioxidant is within the above range, there is such an effect that the cured product has more excellent heat resistance.

Specific examples of the filler include talc powder, silica powder, clay powder, calcium carbonate powder, magnesium carbonate powder, calcium silicate powder, glass powder, alumina powder, zinc oxide powder, magnesium oxide powder, aluminum nitride powder, boron nitride powder, and aluminum hydroxide powder. The filler may be one subjected to surface treatment with fatty acid soap or the like. These may be used alone or as a mixture of two or more of them. Among these, preferred are talc powder, silica powder, clay powder, calcium carbonate powder, magnesium carbonate powder, calcium silicate powder, and glass powder, and particularly preferred is calcium carbonate powder in order to impart a high modulus to the cured product. The calcium carbonate powder is preferably one subjected to surface treatment with fatty acid soap or the like. More preferably, surface-treated calcium carbonate powder and surface-untreated calcium carbonate powder are used in combination because there is such an effect that the cured product has higher elongation, higher strength, and more excellent heat resistance. For the purpose of imparting thermal conductivity to the moisture-curable composition, preferred is a filler having thermal conductivity such as alumina powder, zinc oxide powder, magnesium oxide powder, aluminum nitride powder, or boron nitride powder, and for the purpose of imparting flame retardancy to the moisture-curable composition, preferred is aluminum hydroxide powder. When thermal conductivity is imparted to the moisture-curable composition, the moisture-curable composition can be used as a heat dissipating agent that develops thermal conductivity.

From the viewpoint that the cured product has higher elongation, higher strength, and more excellent heat resistance, the average particle diameter of the filler is preferably 0.001 to 90 µm, more preferably 0.005 to 50 µm, most preferably 0.01 to 20 µm. Further, it is preferred that a filler having an average particle diameter of 0.5 µm or more and 90 µm or less and a filler having an average particle diameter of 0.001 µm or more and less than 0.5 µm are mixed, and in this case, the content of the filler having an average particle diameter of 0.001 µm or more and less than 0.5 µm is preferably 100 to 300 parts by mass, more preferably 150 to 250 parts by mass, even more preferably 200 to 240 parts by mass per 100 parts by mass of the filler having an average particle diameter of 0.5 µm or more and 90 µm or less. It should be noted that the average particle diameter herein refers to a particle diameter at a cumulative frequency of 50% in a particle size distribution as measured by laser diffraction/scattering. The particle diameter at a cumulative frequency of 50% in the measured particle size distribution is also referred to as 50% average particle diameter or D50.

In a preferred embodiment, the moisture-curable composition contains, as a filler, surface-untreated calcium carbonate powder having an average particle diameter of 0.5 µm or more and 90 µm or less and calcium carbonate powder subjected to surface treatment with fatty acid soap and having an average particle diameter of 0.001 µm or more and less than 0.5 µm. In this case, the content of the calcium carbonate powder subjected to surface treatment with fatty acid soap and having an average particle diameter of 0.001 µm or more and less than 0.5 µm is preferably 100 to 300 parts by mass, more preferably 150 to 250 parts by mass, even more preferably 200 to 240 parts by mass per 100 parts by mass of the surface-untreated calcium carbonate powder having an average particle diameter of 0.5 µm or more and 90 µm or less.

The content of the filler (or the total amount of two or more types of the fillers) is preferably 2 to 400 parts by mass, more preferably 10 to 300 parts by mass, even more preferably 30 to 200 parts by mass, still even more preferably 100 to 200 parts by mass, particularly preferably 140 to 180 parts by mass per 100 parts by mass of the component (A) (or per 100 parts by mass of the total amount of two or more types of the components (A)). When the content of the filler is within the above range, the cured product has higher elongation, higher strength, and more excellent heat resistance.

When the filler to be used is one having thermal conductivity such as alumina powder, zinc oxide powder, magnesium oxide powder, aluminum nitride powder, or boron nitride powder, the content of the filler having thermal conductivity is not limited but is, for example, preferably 55 to 95 mass%, more preferably 60 to 90 mass% relative to the total amount of the moisture-curable composition.

The filler having thermal conductivity is preferably a combination of two or more types of thermally-conductive fillers different in average particle diameter. This makes it possible to obtain a moisture-curable composition that provides a cured product having more excellent thermal conductivity. For example, it is preferred that a thermally-conductive filler having an average particle diameter of 0.001 µm or more and less than 5 µm and a thermally-conductive filler having an average particle diameter of 5 µm or more and 90 µm or less are used in combination. In this case, the content of the thermally-conductive filler having an average particle diameter of 5 µm or more and 90 µm or less is, for example, 10 to 700 parts by mass, preferably 100 to 500 parts by mass per 100 parts by mass of the thermally-conductive filler having an average particle diameter of 0.001 µm or more and less than 5 µm.

In another preferred embodiment, a thermally-conductive filler having an average particle diameter of 0.001 µm or more and less than 5 µm, a thermally-conductive filler having an average particle diameter of 5 µm or more and less than 20 µm, and a thermally-conductive filler having an average particle diameter of 20 µm or more and 90 µm or less can be used in combination. In this case, the content of the thermally-conductive filler having an average particle diameter of 5 µm or more and less than 20 µm is, for example, 5 to 600 parts by mass, preferably 110 to 200 parts by mass per 100 parts by mass of the thermally-conductive filler having an average particle diameter of 0.001 µm or more and less than 5 µm. The content of the thermally-conductive filler having an average particle diameter of 20 µm or more and 90 µm or less is, for example, 5 to 600 parts by mass, preferably 200 to 400 parts by mass per 100 parts by mass of the thermally-conductive filler having an average particle diameter of 0.001 µm or more and less than 5 µm.

The alkoxysilyl group-containing silane compound refers to a silane compound excluding the component (A) and particularly having a molecular weight of 1000 or less. Specific examples of the alkoxysilyl group-containing silane compound include: silicate compounds typified by methyl silicate, ethyl silicate, propyl silicate, and butyl silicate; alkyl group-containing silane coupling agents such as dimethyldimethoxysilane, methyltrimethoxysilane, methyltriethoxysilane, dimethyldiethoxysilane, and hexyltrimethoxysilane; vinyl group-containing silane coupling agents such as vinyltrimethoxysilane and vinyltriethoxysilane; phenyl group-containing silane coupling agents such as phenyltrimethoxysilane, diphenyldimethoxysilane, and phenyltriethoxysilane; amino group-containing silane coupling agents such as N-2-(aminoethyl)-3-aminopropyltrimethoxysilane, N-2-(aminoethyl)-3-aminopropylmethyldimethoxysilane, N-2-(aminoethyl)-3-aminopropylmethyltrimethoxysilane, N-2-(aminoethyl)-3-aminopropylmethyltriethoxysilane, 3-aminopropyltrimethoxysilane, 3-aminopropyltriethoxysilane, and N-phenyl-3-aminopropyltrimethoxysilane; glycidyl group-containing silane coupling agents such as 3-glycidoxypropylmethyldimethoxysilane, 3-glycidoxypropyltrimethoxysilane, and 3-glycidoxysilyltriethoxysilane; and (meth)acryloyl group-containing silane coupling agents such as 3-(meth)acryloxypropylmethyldimethoxysilane, 3-(meth)acryloxypropyltrimethoxysilane, 3-(meth)acryloxypropylmethyldiethoxysilane, and 3-(meth)acryloxypropyltriethoxysilane. Among these, preferred are amino group-containing silane coupling agents and glycidyl group-containing silane coupling agents because the cured product has higher elongation, higher strength, and more excellent heat resistance. The content of the alkoxysilyl group-containing silane compound (or the total amount of two or more types of the alkoxysilyl group-containing silane compounds) is preferably 0.1 to 25 parts by mass, more preferably 0.3 to 20 parts by mass, particularly preferably 0.5 to 18 parts by mass per 100 parts by mass of the component (A) (or per 100 parts by mass of the total amount of two or more types of the components (A)). The content of the alkoxysilyl group-containing silane compound is preferably within the above range because the cured product has higher elongation, higher strength, and more excellent heat resistance.

Specific examples of the plasticizer are roughly classified into phthalic acid ester-based plasticizers and non-phthalic acid-based plasticizers, and non-phthalic acid ester-based plasticizers are preferred because their cancer-causing effects are low and the effect of the present invention can be maintained. The non-phthalic acid-based plasticizers are not limited, and examples thereof include: a (meth)acrylic polymer-based plasticizer obtained by polymerizing (meth)acrylic monomers; a polyether polyol-based plasticizer such as polyethylene glycol, polypropylene glycol, or polytetramethylene glycol; a polyester-based plasticizer obtained from a dibasic acid such as sebacic acid or adipic acid and a dihydric alcohol such as ethylene glycol, diethylene glycol, triethylene glycol, or propylene glycol; a process oil-based plasticizer; and an alkylsulfonic acid phenyl ester and acetyl tributyl citrate. The viscosity of the plasticizer in an atmosphere at 25°C is not limited but is, for example, 0.1 to 5 Pa·s. The amount of the plasticizer to be added (or the total amount of two or more types of the plasticizers) is preferably 5 to 300 parts by mass, more preferably 10 to 150 parts by mass, particularly preferably 12 to 75 parts by mass per 100 parts by mass of the component (A) (or per 100 parts by mass of the total amount of two or more types of the components (A)) used in the present invention. When the amount of the plasticizer to be added is within the above range, the cured product has higher elongation, higher strength, and more excellent heat resistance.

Specific examples of the solvent include a ketone-based solvent, an alcohol-based solvent, a glycol-based solvent, a hydrocarbon-based solvent, and an ester-based solvent.

The dispersant is not limited but is preferably a hydroxyl group-containing carboxylic acid ester from the viewpoint that the dispersibility of the components (A) to (C) is easily improved. The dispersant may be either a synthetic product or a commercially-available product. Specific examples of the commercially-available product include DISPER BYK (Registered Trademark) Series manufactured by BYK. The content of the dispersant is not limited but is, for example, 0.01 to 20 parts by mass per 100 parts by mass of the component (A).

### <Curing method and cured product>

The moisture-curable composition of the present invention may be a one-component or two-component type composition. The two-component type herein refers to the form of a composition cured by mixing two liquids when used. The moisture-curable composition can be cured at the humidity and temperature of the outside air. Alternatively, the moisture-curable composition can be cured by heating in a hot-air drier or the like. Preferred specific curing conditions are, for example, a temperature of 5 to 50°C, a humidity of 40 to 70% RH, and a curing time of 5 minutes to 10 days. A cured product obtained by curing the moisture-curable composition of the present invention is also an aspect of the present invention. That is, the present invention also provides a cured product obtained by curing the moisture-curable composition.

### <Intended uses>

The moisture-curable composition of the present invention provides a cured product having high elongation, high strength, and excellent heat resistance and is therefore preferably used for various applications such as adhesives, sealing agents, sealants, potting agents, coating agents, thermally-conductive resins, flame-retardant resins, and electrically-conductive pastes, particularly for automobile parts, electric/electronic parts, and building materials.

Examples of the automobile parts include oil pans, transmissions, oil pressure switches, air flow meters, cam position sensors, water-temperature sensors, crank position sensors, intake air temperature sensors, vehicle speed sensors, in-vehicle electronic substrates, nickel batteries, Li batteries, and fuel cells, and adhesives, sealing agents, and potting agents using the moisture-curable composition of the present invention can be suitably used.

When thermal conductivity is imparted to the moisture-curable composition of the present invention, the moisture-curable composition of the present invention can be used for various applications such as dissipation of heat from electronic substrates, dissipation of heat from electronic devices such as mobile phones and personal computers, dissipation of heat from lighting devices such as LEDs, dissipation of heat from optical pick-up modules, dissipation of heat from camera modules, dissipation of heat from sensing devices, dissipation of heat from power semiconductors, dissipation of heat from inverters, dissipation of heat from converters, and dissipation of heat from ECU parts.

The moisture-curable composition of the present invention can be used for bonding of various adherends. Particularly, the moisture-curable composition of the present invention is excellent in adhesiveness to aluminum and is therefore suitably used as an adhesive or a sealing agent for applications where aluminum is used. Examples of the applications where aluminum is used include back sheets including an aluminum layer for use in solar batteries, radiating fins, and cases for batteries or the like.

### <Method of use>

A sealing method using the moisture-curable composition of the present invention is not limited but is typically, for example, Foamed-In-Place Gasket (FIPG). The FIPG refers to a method in which the moisture-curable composition of the present invention is applied onto a flange of a part to be sealed with the use of an automatic coating machine or the like and, in a state where the flange and the other flange are bonded together, the moisture-curable composition is cured to allow them to adhere to each other to achieve sealing. More specifically, the FIPG refers to a method for sealing at least part of a space between at least two flanges of a part to be sealed having the at least two flanges, the method including the step of applying the moisture-curable composition onto a surface of at least one of the flanges, the step of bonding together the flange, onto which the moisture-curable composition has been applied, and the other flange with the moisture-curable composition being interposed between them, and the step of curing the moisture-curable composition to seal at least part of a space between the at least two flanges.

### Examples

The present invention will be described below in more detail with reference to examples, but the present invention is not limited to these examples. Hereinafter, a moisture-curable composition may be simply referred to as a composition.

### [Examples 1 to 8 and Comparative Examples 1 to 4]

### <Preparation of moisture-curable composition>

The following components were prepared to prepare moisture-curable compositions.
Component (A): Organic polymer having two or more alkoxysilyl groups in its molecule
   · Linear polyoxyalkylene having trimethoxysilyl groups at both ends and a viscosity of 50 Pa·s in an atmosphere at 25°C (SILYL (Registered Trademark) SAX575 manufactured by KANEKA CORPORATION)
Component (B): Organometallic catalyst
   · Zinc alkylamine complex (K-KAT 670 manufactured by KING INDUSTRIES)
   · Titanium diisopropoxy bis(ethylacetoacetate) (TC-750 manufactured by Matsumoto Fine Chemical Co., Ltd.)
   · Dioctyltin dilaurate (NEOSTANN U-810 manufactured by Nitto Kasei Co., Ltd.)
Component (C): Aromatic secondary amine compound
   · N,N'-di-2-naphthyl-p-phenylenediamine (Nocrac White manufactured by OUCHI SHINKO CHEMICAL INDUSTRIAL CO., LTD.)
   · 4,4'-bis(α,α-dimethylbenzyl)diphenylamine (Nocrac CD manufactured by OUCHI SHINKO CHEMICAL INDUSTRIAL CO., LTD.)
Component (C'): Antioxidant other than component (C)
   · Liquid thioether-based antioxidant (AO-26 manufactured by ADEKA CORPORATION)
   · Pentaerythritol tetrakis[3-(dodecylthio)propionate] (AO-412S manufactured by ADEKA CORPORATION)
   · Tetrakis[3-(3'-5'-di-t-butyl-4'-hydroxyphenyl)propionate] (AO-60 manufactured by ADEKA CORPORATION)
Filler
   · Untreated calcium carbonate powder having an average particle diameter of 1.3 µm (SOFTON 1800 manufactured by BIHOKU FUNKA KOGYO CO., LTD.)
   · Calcium carbonate powder subjected to surface treatment with fatty acid soap and having an average particle diameter of 0.05 µm (KALFAINE 500 manufactured by Maruo Calcium Co., Ltd.)

The component (A), the component (C) (and/or the component (C')), and the filler were weighed in a stirring tank and stirred with a stirrer at 25°C for 60 minutes while vacuum defoaming was performed. Then, the component (B) was weighed and added, and the resultant was further stirred in an atmosphere at 25°C for 30 minutes while vacuum defoaming was performed to obtain a moisture-curable composition. It should be noted that the detailed amounts prepared are according to Table 1, and all the numerical values are expressed in parts by mass. In Table 1, "Total" refers to the total amount of the components (A) to (C) and the component (C'). A blank in Table 1 indicates that the corresponding component is not contained.

### [Table 1]

**Table 1**

| Components | Raw materials | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|
| Component (A) | SAX575 | 100 | 100 | 100 | 100 | 100 | 100 | 100 | 100 | 100 | 100 | 100 | 100 |
| Component (B) | K-KAT670 | 1.8 | 1.8 | 1.8 | 1.8 | 1.8 | 0.9 | | | 1.8 | 1.8 | 1.8 | 1.8 |
| | TC-750 | | | | | | 0.9 | 1.8 | | | | | |
| | U-810 | | | | | | | | 1.8 | | | | |
| Component (C) | Nocrac White | 0.7 | | | | | | | | | | | |
| | Nocrac CD | | 0.7 | 1.4 | 0.7 | 0.7 | 0.7 | 0.7 | 0.7 | | | | |
| Component (C') | AO-26 | | | | 1.4 | | 1.4 | 1.4 | 1.4 | | | 1.4 | |
| | AO-412S | | | | | 1.4 | | | | | | | 1.4 |
| | AO-60 | | | | | | | | | | 0.7 | 0.7 | 0.7 |
| Filler | 1800 | 50 | 50 | 50 | 50 | 50 | 50 | 50 | 50 | 50 | 50 | 50 | 50 |
| | 500 | 110 | 110 | 110 | 110 | 110 | 110 | 110 | 110 | 110 | 110 | 110 | 110 |
| Total | | 102.5 | 102.5 | 103.2 | 103.9 | 103.9 | 103.9 | 103.9 | 103.9 | 101.8 | 102.5 | 103.9 | 103.9 |

### <Evaluations>

The moisture-curable compositions of Examples 1 to 8 and Comparative Examples 1 to 4 were subjected to hardness measurement, tensile strength measurement, elongation percentage (elongation at break) measurement, and tensile lap-shear strength measurement and were then further subjected to these measurements after a heat resistance test. The results are summarized in Table 2.

### [Hardness Measurement]

A frame having a thickness of 2 mm was formed as a spacer on a steel plate subjected to release treatment, and the moisture-curable composition was applied thereonto to have a uniform thickness. The applied moisture-curable composition was allowed to stand in an atmosphere at 23°C and 50% RH for 7 days to produce a cured product. Three cured products were stacked to prepare a test piece. A durometer hardness tester (Type A) was used, and the durometer was pressed against the test piece at a pressure of 10 N to measure hardness. This was repeated five times, and the average of measured values was defined as "hardness (unitless)". The details comply with JIS K 6249:2003. The result is shown in Table 2. When the moisture-curable composition does not contain a thermally-conductive filler, it is preferred that the hardness (initial stage) of the cured product is softer than A50 (the hardness is less than 50) in consideration of flexibility.

### [Tensile strength measurement]

A frame having a thickness of 2 mm was formed as a spacer on a steel plate subjected to release treatment, and the moisture-curable composition was applied thereonto to have a uniform thickness. The applied moisture-curable composition was allowed to stand in an environment at 23°C and 50% RH for 7 days to produce a cured product. The cured product was punched out with a No. 5 dumbbell-shaped die to prepare a test piece. The both ends of the test piece were fixed to chucks. The test piece was pulled at a tensile speed of 500 mm/min to measure a maximum load. The result is shown in Table 2. The strength at the maximum load was defined as "tensile strength (MPa)". The details comply with JIS K 6251 (2010). The tensile strength (initial stage) of the cured product is preferably 1.6 MPa or more, more preferably 1.7 MPa or more.

### [Elongation percentage (elongation at break) measurement]

A frame having a thickness of 2 mm was formed as a spacer on a steel plate subjected to release treatment, and the moisture-curable composition was applied thereonto to have a uniform thickness. The applied moisture-curable composition was allowed to stand in an environment at 23°C and 50% RH for 7 days to produce a cured product. The cured product was punched out with a No. 5 dumbbell-shaped die to prepare a test piece, and marked lines were drawn on the test piece at intervals of 25 mm. The both ends of the test piece were fixed to chucks in the same manner as in the tensile strength measurement, and the test piece was pulled to break at a tensile speed of 500 mm/min. At the time of measurement, the test piece was stretched so that the interval between the marked lines was widened, and therefore the interval between the marked lines was measured with a vernier caliper until the test piece was broken. The ratio of elongation of the interval between the marked lines to the initial interval between the marked lines was determined as "elongation percentage (%)". The elongation percentage was evaluated according to the following criteria, and the result is shown in Table 2. When the moisture-curable composition does not contain a thermally-conductive filler, the elongation percentage (initial stage) of the cured product is preferably 250% or more, more preferably 350% or more, even more preferably 400% or more from the viewpoint of high elongation.

### [Tensile lap-shear strength measurement]

Two aluminum plates (A1050P) of 25 mm wide × 100 mm long × 1 mm thick were prepared, and the moisture-curable composition was applied onto one of the aluminum plates. Then, the aluminum plate was bonded and fixed to the other aluminum plate in such a manner that an overlap between them was 25 mm wide × 10 mm long × 1 mm thick. Then, the resultant was allowed to stand in an environment at 23°C and 50% RH for 7 days to prepare a test piece. The test piece was fixed to the chucks of a universal tensile tester and pulled at a tensile speed of 50 mm/min to measure "tensile lap-shear strength (MPa)" from a maximum strength and a bonded area. The details comply with JIS K 6850:1999. The result is shown in Table 2. It should be noted that in the present invention, the tensile lap-shear strength (initial stage) of the cured product is preferably 1.3 MPa or more.

### [Heat resistance test]

Test pieces for measuring hardness, tensile strength, elongation percentage, and tensile lap-shear strength were prepared and then subjected to measurements respectively in such manners as described above to measure hardness, tensile strength, elongation percentage, and tensile lap-shear strength at time 0 (initial stage). Other test pieces were prepared, placed in a hot-air drier whose atmosphere was set at 120°C, taken out after allowed to stand for 500 hours or 1000 hours, cooled to room temperature, and then subjected to measurements respectively in such manners as described above to measure hardness, tensile strength, elongation percentage, and tensile lap-shear strength. The results are shown in Table 2. In Table 2, "Initial stage", "500 h", and "1000 h" respectively represent a measured value at initial stage, a measured value after still standing for 500 hours, and a measured value after still standing for 1000 hours. Further, "change ratio (%)" was calculated using the formula: Change ratio = [(measured value after still standing for 1000 hours - measured value at initial stage)/measured value at initial stage] × 100 and was shown in Table 2. The change ratio after 1000 hours is preferably -60 to 60%, more preferably -30 to 30%.

It should be noted that in Table 2, "-" indicates that the sample was in an unmeasurable state after exposed to an atmosphere used in the heat resistance test. As for the hardness, the tensile strength, and the elongation percentage, the cured product having a specific shape was brittle and therefore could not be subjected to measurement. As for the tensile lap-shear strength, the cured product could not be sandwiched and held between aluminum plates as adherends and therefore could not be subjected to measurement.

### [Table 2]

**Table 2**

| Test items | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|
| Hardness | Initial stage | 47 | 45 | 44 | 47 | 43 | 44 | 42 | 44 | 47 | 47 | 41 | 44 |
| | 500h | 42 | 36 | 38 | 34 | 33 | 28 | 31 | 26 | - | - | 29 | 26 |
| | 1000h | 40 | 25 | 20 | 28 | 29 | 21 | 21 | 25 | - | - | - | - |
| | Change ratio (%) | -15 | -44 | -55 | -40 | -33 | -52 | -50 | -43 | - | - | - | - |
| Tensile strength (MPa) | Initial stage | 2.2 | 1.9 | 1.7 | 2.0 | 1.8 | 1.8 | 1.8 | 2.1 | 1.9 | 1.9 | 1.8 | 1.6 |
| | 500h | 2.7 | 2.7 | 2.5 | 2.6 | 2.3 | 2.0 | 2.3 | 2.3 | - | - | 2.4 | 1.8 |
| | 1000h | 2.5 | 1.9 | 1.8 | 2.4 | 2.7 | 1.4 | 1.3 | 1.5 | - | - | - | - |
| | Change ratio (%) | 11 | -1 | 6 | 20 | 50 | -22 | -28 | -29 | - | - | - | - |
| Elongation percentage (%) | Initial stage | 420 | 424 | 400 | 408 | 408 | 408 | 452 | 280 | 400 | 396 | 384 | 336 |
| | 500h | 536 | 564 | 540 | 564 | 552 | 516 | 688 | 604 | - | - | 644 | 624 |
| | 1000h | 508 | 552 | 484 | 604 | 624 | 500 | 496 | 420 | - | - | - | - |
| | Change ratio (%) | 21 | 30 | 21 | 48 | 53 | 23 | 10 | 50 | - | - | - | - |
| Tensile lap-shear strength (MPa) | Initial stage | 2.3 | 2.3 | 2.6 | 2.7 | 2.5 | 2.2 | 2.1 | 2.5 | 2.4 | 2.3 | 2.4 | 1.7 |
| | 500h | 1.7 | 2.6 | 2.9 | 3.1 | 2.2 | 1.9 | 1.9 | 2.0 | - | - | 1.8 | 1.9 |
| | 1000h | 2.3 | 1.3 | 2.0 | 2.7 | 2.0 | 1.1 | 1.2 | 1.1 | - | - | - | - |
| | Change ratio (%) | 0 | -44 | -23 | 0 | -20 | -50 | -43 | -56 | - | - | - | - |

As a result of comparison between Examples 1 to 8 and Comparative Examples 1 to 4, the change ratios of all the test items were within the range of -60 to 60% in Examples 1 to 8, but the cured products of Comparative Examples 1 and 2 were in an unmeasurable state after 500 hours due to thermal degradation, and therefore all the test items could not be performed, and the cured products of Comparative Examples 3 and 4 were in an unmeasurable state after 1000 hours due to thermal degradation, and therefore all the test items could not be performed. Examples 1 to 8 demonstrate that the use of the component (C) improves heat resistance. As in the case of Comparative Examples 1 to 4, when the component (C) is not contained, sufficient heat resistance is not shown. As in the case of Comparative Examples 3 and 4, when the component (C) is not contained and only the component (C') is used, heat resistance is not improved. Particularly, Example 1 is particularly preferred because N,N'-di-2-naphthyl-p-phenylenediamine is added as the component (C) and therefore the change ratios of all the test items shown in Table 2 are within the range of -30 to 30%.

### [Example 9]

### <Preparation of moisture-curable composition>

The following components were prepared to prepare a moisture-curable composition.
Component (A): Organic polymer having two or more alkoxysilyl groups in its molecule
   · Linear polyoxyalkylene having dimethoxysilyl groups at both ends and a viscosity of 50 Pa·s in an atmosphere at 25°C (SILYL (Registered Trademark) SAX750 manufactured by KANEKA CORPORATION)
Component (B): Organometallic catalyst
   · Zinc alkylamine complex (K-KAT 670 manufactured by KING INDUSTRIES)
Component (C): Aromatic secondary amine compound
   · 4,4'-bis(α,α-dimethylbenzyl)diphenylamine (Nocrac CD manufactured by OUCHI SHINKO CHEMICAL INDUSTRIAL CO., LTD.)
Filler
   · Alumina powder having an average particle diameter of 0.5 µm (represented as Filler 1 in Table 3 shown below)
   · Alumina powder having an average particle diameter of 5.4 µm (represented as Filler 2 in Table 3 shown below)
   · Alumina powder having an average particle diameter of 40 µm (represented as Filler 3 in Table 3 shown below)
Plasticizer
   · Acrylic polymer having a viscosity of 3.5 Pa·s in an atmosphere at 25°C and a weight-average molecular weight of 2500 (represented as Plasticizer 1 in Table 3 shown below)
Silane coupling agent
   · Methyltrimethoxysilane (reagent)
Dispersant
   · Hydroxyl group-containing carboxylic acid ester (represented as Dispersant 1 in Table 3 shown below)

The component (A), the component (C), the filler, the plasticizer, the silane coupling agent, and the dispersant were weighed in a stirring tank and stirred with a stirrer at 25°C for 60 minutes while vacuum defoaming was performed. Then, the component (B) was weighed and added, and the resultant was further stirred in an atmosphere at 25°C for 30 minutes while vacuum defoaming was performed to obtain a moisture-curable composition. It should be noted that the detailed amounts prepared are according to Table 3, and all the numerical values are expressed in parts by mass. In Table 3, "Total" refers to the total amount of all the components.

### [Table 3]

**Table 3**

| Components | Raw materials | Example 9 |
|---|---|---|
| Component (A) | SAX750 | 100.0 |
| Component (B) | K-KAT670 | 6.0 |
| Component (C) | Nocrac CD | 2.7 |
| Filler | Filler 1 | 181.6 |
| | Filler 2 | 246.7 |
| | Filler 3 | 592.8 |
| Plasticizer | Plasticizer 1 | 27.2 |
| Silane coupling agent | Methyltrimethoxysilane | 15.9 |
| Dispersant | Dispersant 1 | 10.7 |
| Total | | 1183.6 |

### <Evaluations>

The moisture-curable composition of Example 9 was subjected to measurements of hardness, tensile strength, elongation percentage (elongation at break), and tensile lap-shear strength in the same manners as in the measurements in Examples 1 to 8 and Comparative Examples 1 to 4. Further, the measurement of thermal conductivity was performed in the following manner. The obtained results are shown below in Table 4 and Table 5 as hardness, tensile strength, elongation percentage, tensile lap-shear strength, and thermal conductivity at initial stage.

### [Thermal conductivity measurement]

The measurement of thermal conductivity was performed in the following manner.
Instrument: TRIDENT that is a thermal conductivity measuring instrument manufactured by C-THERM
Test method: Modified Transient Plane Source (MTPS) in ASTM D7984-21

Specifically, a cured product having a diameter of 18 mm or more and a thickness of 2 mm was first produced (n = 3). Then, a contact liquid was dropped onto a sensor (resistance temperature detector unit), the cured product was placed on the sensor, and a 500 g weight was placed thereon. Here, the contact liquid was water. Then, thermal conductivity was measured in an atmosphere at 25°C.

It should be noted that when the moisture-curable composition contains a thermally-conductive filler, the hardness of the cured product at initial stage is preferably 100 or less. The elongation percentage of the cured product at initial stage is preferably 80% or more. Preferred tensile strength and tensile lap-shear strength of the cured product at initial stage are the same as those described above. The thermal conductivity of the cured product at initial stage is preferably 2.5 W/m·K or more.

Further, test pieces for measuring hardness, tensile strength, elongation percentage (elongation at break), tensile lap-shear strength, and thermal conductivity were subjected to a heat resistance test in an atmosphere at 120°C in the same manner as the heat resistance test in Examples 1 to 8 and Comparative Examples 1 to 4 except that the standing times were 240 hours, 500 hours, 750 hours, and 1000 hours. The results are summarized in Table 4.

Further, test pieces for measuring hardness, tensile strength, elongation percentage (elongation at break), tensile lap-shear strength, and thermal conductivity were placed in a constant temperature and humidity chamber whose atmosphere was set at 85°C and 85% RH, taken out after allowed to stand for 240 hours, 500 hours, 750 hours, and 1000 hours, cooled to room temperature, and then subjected to measurements respectively in such manners as described above to measure hardness, tensile strength, elongation percentage, tensile lap-shear strength, and thermal conductivity. The results are summarized in Table 5.

**[Table 4]**

| Table 4: Heat resistance test (in an atmosphere at 120°C) | | | | | |
|---|---|---|---|---|---|
| Test items | Initial stage | 240h | 500h | 750h | 1000h |
| Hardness | 81 | 83 | 80 | 80 | 79 |
| Tensile strength (MPa) | 3.2 | 3.9 | 3.8 | 3.2 | 3.0 |
| Elongation percentage (%) | 100 | 100 | 100 | 90 | 80 |
| Tensile lap-shear strength (MPa) | 2.4 | 2.7 | 2.6 | 2.3 | 2.3 |
| Thermal conductivity (W/m·K) | 2.7 | 2.9 | 3.0 | 3 | 3.1 |

**[Table 5]**

| Table 5: High-temperature and high-humidity resistance test (in an atmosphere at 85°C and 85% RH) | | | | | |
|---|---|---|---|---|---|
| Test items | Initial stage | 240h | 500h | 750h | 1000h |
| Hardness | 81 | 85 | 83 | 83 | 83 |
| Tensile strength (MPa) | 3.2 | 4.4 | 4.5 | 4 | 4 |
| Elongation percentage (%) | 100 | 80 | 75 | 80 | 85 |
| Tensile lap-shear strength (MPa) | 2.4 | 2.8 | 2.8 | 2.7 | 2.7 |
| Thermal conductivity (W/m·K) | 2.7 | 2.9 | 3.0 | 3.1 | 3.1 |

As can be seen from Tables 4 and 5 shown above, the moisture-curable composition of Example 9 is excellent in all of hardness, tensile strength, elongation percentage (elongation at break), tensile lap-shear strength, and thermal conductivity. Further, when the heat resistance test was performed at 120°C, the change ratios of all these test items after 1000 hours were within the range of -20 to 20%, demonstrating excellent heat resistance. Further, when the high-temperature and high-humidity resistance test was performed at 85°C and 85% RH, the change ratios of all these test items after 1000 hours were within the range of -25 to 25%, demonstrating excellent resistance to high temperature and high humidity.

### INDUSTRIAL APPLICABILITY

The moisture-curable composition of the present invention provides a cured product having high elongation, high strength, and excellent heat resistance and is therefore suitably used for various applications such as adhesives, sealing agents, sealants, potting agents, coating agents, thermally-conductive resins, flame-retardant resins, and electrically-conductive pastes. Therefore, the moisture-curable composition of the present invention can be applied to a variety of fields and is therefore industrially useful.

The present application is based on Japanese Patent Application No. 2023-195483 filed on November 16, 2023, the disclosure of which is incorporated herein by reference in its entirety.

## Claims

1. A moisture-curable composition comprising the following components (A) to (C):
Component (A): an organic polymer having two or more alkoxysilyl groups in its molecule;
Component (B): an organometallic catalyst; and
Component (C): an aromatic secondary amine compound.

2. The moisture-curable composition according to claim 1, wherein a metal of the component (B) is at least one selected from the group consisting of zinc, titanium, and tin.

3. The moisture-curable composition according to claim 2, wherein the metal of the component (B) is zinc.

4. The moisture-curable composition according to claim 1, wherein the component (C) has any one of structures represented by the following general formulas 1 to 3: 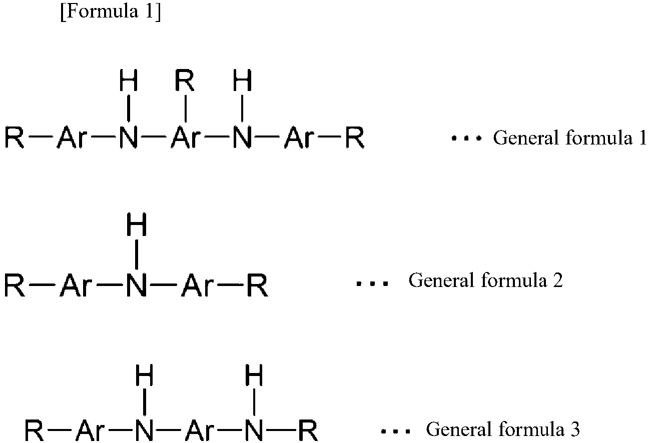 wherein Ars are each independently an aromatic hydrocarbon group and Rs are each independently a hydrogen atom, a substituted or unsubstituted alkyl group, a substituted or unsubstituted cycloalkyl group, a substituted or unsubstituted alkenyl group, or a substituted or unsubstituted alkynyl group.

5. The moisture-curable composition according to claim 1, wherein the component (C) contains N,N**'**-di-2-naphthyl-p-phenylenediamine or 4,4'-bis(α,α-dimethylbenzyl)diphenylamine.

6. The moisture-curable composition according to claim 1, wherein a main chain of the organic polymer as the component (A) is a polyoxyalkylene or a poly(meth)acrylate.

7. The moisture-curable composition according to claim 1, wherein the organic polymer as the component (A) is linear and has alkoxysilyl groups at both ends thereof.

8. The moisture-curable composition according to claim 1, wherein a content of the component (C) is 0.01 to 20 parts by mass per 100 parts by mass of the component (A).

9. A cured product obtained by curing the moisture-curable composition according to claim 1.
